# EUROPÄISCHE PATENTSCHRIFT

(11) **EP 0 793 820 B1**
(45) Veröffentlichungstag und Bekanntmachung des Hinweises auf die Patenterteilung: **07.06.2000**
(21) Anmeldenummer: 95935855.7
(22) Anmeldetag: 08.11.1995
(51) Int. Cl.: G05B 19/418

(54) **PROJEKTIERUNGSVERFAHREN FÜR DIE LEITTECHNIK EINER AUS KOMPONENTEN BESTEHENDEN TECHNISCHEN ANLAGE**
PROCESS FOR DESIGNING THE CONTROL SYSTEM OF A TECHNICAL INSTALLATION CONSISTING OF COMPONENTS
PROCEDE DE PLANIFICATION DESTINE A LA TECHNIQUE DE GESTION D'INSTALLATIONS INDUSTRIELLES MULTICOMPOSANTS

(30) Priorität: 21.11.1994 DE 4441374
(43) Veröffentlichungstag der Anmeldung: 10.09.1997
(73) Patentinhaber: SIEMENS AKTIENGESELLSCHAFT, 80333 München (DE)
(72) Erfinder: KAPINUS, Peter, D-91085 Weisendorf (DE); LINDEBNER, Oswald, D-91056 Erlangen (DE)
(86) Internationale Anmeldenummer: DE9501542
(87) Internationale Veröffentlichungsnummer: WO9616361

(56) Entgegenhaltungen:
- DE-A- 4 219 902
- US-A- 4 807 108

## Beschreibung

Die Erfindung bezieht sich auf ein Projektierungsverfahren für die Leittechnik einer aus Komponenten bestehenden technischen Anlage. Sie bezieht sich weiter auf eine Einrichtung zur Durchführung des Verfahrens

Beim Betrieb einer komplexen, aus Komponenten bestehenden technischen Anlage, insbesondere einer Kraftwerksanlage, ist es erforderlich, zur Ermittlung eines Ist-Zustands der Komponenten der technischen Anlage oder auch der Gesamtanlage verschiedene Größen zu messen. Weiterhin müssen zur Regelung der Komponenten der technischen Anlage oder auch der Gesamtanlage Steuersignale an Steuereinheiten innerhalb der Komponenten gesendet werden. Diese Prozesse der Messung von Größen (Sensorik) und der Steuerung von Anlagenteilen (Aktorik) sind in der Leittechnik der technischen Anlage zusammengefaßt.

Aus der DE 42 19 902 A1 ist ein System zum Erstellen von Steuerungsdaten für eine automatische Fertigungsstraße bekannt, bei dem ein Prozeßplanungssystem Prozesse entsprechend den überreichten Teilezeichnungen plant, die für die Fertigung bzw. Herstellung der Teile verwendeten Fertigungsmaschinen auswählt sowie deren Gebrauchsreihenfolge bestimmt. Weiterhin ist aus der US 4,807,108 ein Verfahren zur Kontrolle eines Produktionsprozesses bekannt, bei dem ein Produkt erstellt wird.

Bei der Projektierung einer komplexen technischen Anlage muß ein für die Regelung und Steuerung der Anlage vorgesehenes Leitsystem erstellt werden. Dazu ist neben einer Auswahl von für das Leitsystem notwendigen Bauteilen insbesondere auch eine Verknüpfung der Bauteile miteinander notwendig. Darüber hinaus muß eine Querverbindung zwischen den Bauteilen oder Hardware-Komponenten des Leitsystems und dem Leittechnikkonzept oder der Leittechnik-Software erstellt werden. Dies erfolgt üblicherweise an einem zentralen Planungsort.

Die zur Projektierung der Leittechnik erforderlichen Verfahrensschritte werden manuell durchgeführt und sind somit sehr kostenintensiv. Durch vorgegebene Strukturen in Leittechnikkonzepten ist die projektierte Leittechnik nicht individuell auf die technische Anlage abstimmbar. Zudem ist aufgrund der manuellen Erstellung der Leittechnik an einem zentralen Planungsort das erstellte Leittechnikkonzept unflexibel und daher am Ort der Konstruktion der technischen Anlage nicht mehr abänderbar.

Der Erfindung liegt die Aufgabe zugrunde, ein Projektierungsverfahren für die Leittechnik einer aus Komponenten bestehenden technischen Anlage anzugeben, das mindestens teilweise maschinell durchführbar und für jede technische Anlage individuell auf die Anlage abstimmbar ist. Dies soll mit einer besonders geeigneten Einrichtung erreicht werden.

Bezüglich des Projektierungsverfahrens der obengenannten Art wird diese Aufgabe erfindungsgemäß gelöst, indem
- für die für den Betrieb jeder Komponente der technischen Anlage erforderlichen Parameter auf Datensätze generiert und hinterlegt werden,
- anhand der Datensätze Meß- und/oder Steuerprozesse automatisiert erstellt werden,
- für jeden Meß- und/oder Steuerprozeß zu dessen Ausführung geeignete Bauteile ausgewählt und im Rahmen eines Ablaufplans automatisiert miteinander verknüpft werden,
- anhand von für die technische Anlage relevantem Wissen eine Automatisierungsstruktur vorgegeben wird, und
- jeder Ablaufplan der Automatisierungsstruktur zur Erstellung der Leittechnik automatisiert zugeordnet wird.

Die Erfindung geht dabei von der Überlegung aus, das Gesamtverfahren zur Projektierung der Leittechnik einer technischen Anlage in mehrere, vorzugsweise fünf, Verfahrensschritte zu unterteilen, wobei jeder dieser Verfahrensschritte derart ausgelegt ist, daß er seiner Natur nach in einem eigenständigen Modul maschinell durchführbar ist. Durch diesen modularen Aufbau ist das gesamte Verfahren automatisierbar; es können aber auch - je nach Komplexität der technischen Anlage - nur einer oder einige der Verfahrensschritte automatisiert sein.

Das Verfahren ist dabei derart strukturiert, daß es für die Projektierung der Leittechnik einer technischen Anlage von der Anlage als Grundlage ausgeht. Somit ist das Verfahren für eine beliebige technische Anlage einsetzbar. Ausgehend vom Konzept für die technische Anlage wird die Leittechnik dadurch individuell an die technische Anlage angepaßt. Bei einem Verfahren dieser Art sind die Verfahrensschritte der Erstellung der Meß- und/oder Steuerprozesse, der Verknüpfung der ausgewählten Bauteile miteinander und der Zuordnung der Ablaufpläne zu der Automatisierungsstruktur vollständig automatisiert.

Die Auswahl der Bauteile für jeden Meß- und/oder Steuerprozeß kann nach vorgegebenen Kriterien manuell von Bedienungspersonal erfolgen. Um jedoch zusätzlich zu einer hohen Zuverlässigkeit sicherzustellen, daß unter einer größtmöglichen Vielfalt an Bauteilen gewählt werden kann, erfolgt die Auswahl der Bauteile für jeden Meß- und/oder Steuerprozeß zweckmäßigerweise anhand von für jedes Bauteil charakteristischen, in einer Datenbank gespeicherten Kenndaten.

Die Kenndaten können dabei beispielsweise eine vollständige technische Beschreibung jedes Bauteils umfassen. Sie umfassen aber mindestens einen Kerndatensatz, der lediglich die grundlegende Funktionsweise des Bauteils beschreibt. In besonders vorteilhafter Ausgestaltung erfolgt die Auswahl der Bauteile ausschließlich anhand dieser funktionellen Kerndatensätze.

Somit ist erreicht, daß ein vollständiges Konzept für die Leittechnik der technischen Anlage lediglich aufgrund der Funktionsweise benötigter Bauteile erstellt werden kann. Dadurch ist eine hohe Flexibilität bei der Erstellung des Leittechnikkonzepts gewährleistet. Erst in einem weiteren Schritt wird sodann ein entsprechendes Bauteil, das die grundlegende Funktionsweise erfüllt, eingeplant. Dies hat den besonderen Vorteil, daß das Projektierungsverfahren zunächst unabhängig von den einzelnen Bauteilen und somit flexibel ist. Modifikationen können leicht vorgenommen werden, da erst am Ende des Verfahrens reale Bauteile eingeplant werden.

Bezüglich der Einrichtung zur Projektierung der Leittechnik einer technischen Anlage wird die Aufgabe erfindungsgemäß gelöst durch:
a) ein Aufbaumodul zur Erstellung von Meß- und/oder Steuerprozessen auf der Grundlage von die technische Anlage beschreibenden Datensätzen,
b) ein Analysemodul zur Auswahl geeigneter Bauteile und deren Verknüpfung miteinander im Rahmen eines Ablaufplans für jeden der Meß- und/oder Steuerprozesse und
c) ein Verknüpfungsmodul zur Zuordnung des Ablaufplans jedes Meß- und/oder Steuerprozesses zu einer vorgebbaren Automatisierungsstruktur.

Zu Beginn eines Projektierungsvorgangs der Leittechnik einer aus Komponenten bestehenden technischen Anlage werden die für den Betrieb jeder Komponente erforderlichen Parameter auf Datensätze abgebildet. Dies kann manuell oder automatisiert erfolgen. Die die technische Anlage beschreibenden Datensätze werden dem Aufbaumodul zugeführt. Im Aufbaumodul werden aufgrund der Datensätze Meß- und/oder Steuerprozesse erstellt. Diese Meß- und/oder Steuerprozesse umfassen Konzepte, wonach Messungen oder Steuerungen realisiert werden. Dabei ist die grundlegende Wirkungsweise oder der grundlegende Funktionsablauf einer Messung oder Steuerung beschrieben.

Die Konzepte für die Meß- und/oder Steuerprozesse werden anschließend an das Analysemodul übergeben. Im Analysemodul werden für jeden Meß- und/oder Steuerprozeß zu dessen Ausführung geeignete Bauteile ausgewählt. Diese Auswahl kann in vorteilhafter Weise anhand der in den Meß- und/oder Steuerprozessen beschriebenen Funktionsabläufe und der grundlegenden Funktionsweise der Bauteile erfolgen. Zur Verknüpfung dieser Bauteile wird für jeden Meß- und/oder Steuerprozeß ein Ablaufplan gebildet. Die so gebildeten Ablaufpläne werden dem Verknüpfungsmodul zugeleitet.

Im Verknüpfungsmodul erfolgt eine Zuordnung des Ablaufplans jedes Meß- und/oder Steuerprozesses zu einer vorgebbaren Automatisierungsstruktur. Somit wird die Leittechnik in Form einer Verschaltungsstruktur einschließlich der erforderlichen Bauteile und Verknüpfungselemente erstellt.

Um dem Analysemodul erforderliche Informationen über zur Verfügung stehende Bauteile zuführen zu können, ist zweckmäßigerweise ein mit dem Analysemodul verbundenes Speichermodul, insbesondere in Form einer Datenbank, für die Bauteile charakterisierende Kenndaten vorgesehen.

In besonders vorteilhafter Ausgestaltung sind die Module in einem mobilen Gehäuse angeordnet. Dadurch wird erreicht, daß die Einrichtung zur Projektierung der Leittechnik einer technischen Anlage flexibel und ortsungebunden einsetzbar ist.

Die mit der Erfindung erzielten Vorteile bestehen insbesondere darin, daß bei einer Strukturierung des Verfahrens zur Projektierung der Leittechnik einer aus Komponenten bestehenden technischen Anlage in mehrere Verfahrensschritte jeder einzelne der Verfahrensschritte automatisierbar ist. Da die Verfahrensschritte voneinander unabhängig sind, ist somit eine teilweise oder vollständige Automatisierung des Verfahrens ermöglicht.

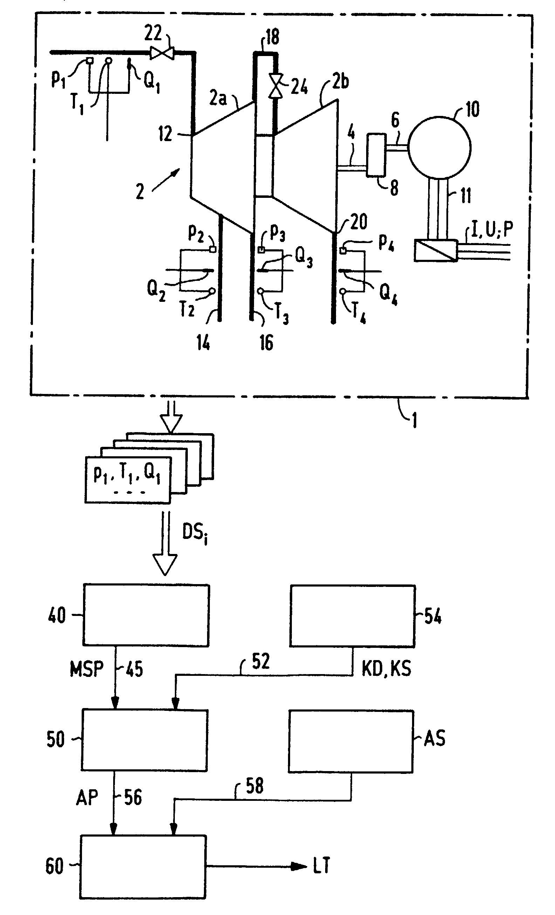

Ein Ausführungsbeispiel der Erfindung wird anhand einer Zeichnung näher erläutert. Dabei zeigt die Figur schematisch eine Einrichtung zur Projektierung der Leittechnik einer Kraftwerksanlage.

Die - nicht näher dargestellte - Kraftwerksanlage umfaßt neben anderen Komponenten beispielsweise eine Turbinen- und Generatorkomponente 1. Innerhalb dieser Komponente 1 ist eine Turbine 2 über Wellen 4, 6 und ein Getriebe 8 mit einem Generator 10 verbunden. Zur Abführung von im Generator 10 erzeugter elektrischer Leistung ist ein Kabelsystem 11 vorgesehen.

Die Turbine 2, die eine Dampfturbine einer Kraftwerksanlage ist, umfaßt einen Hochdruckteil 2a und einen Niederdruckteil 2b. Am Hochdruckteil 2a der Turbine 2 sind eine Hochdruckdampf zuleitung 12, eine Mitteldruckdampfzuleitung 14 und eine Mitteldruckdampfableitung 16 angeordnet. Dampfausgangsseitig ist der Hochdruckteil 2a der Turbine 2 über eine Niederdruckdampfleitung 18 mit dem Eingang des Niederdruckteils 2b der Turbine 2 verbunden. Am Ausgang des Niederdruckteils 2b der Turbine 2 ist eine Dampfabführung 20 angeordnet. Die Hochdruckdampfzuleitung 12 ist mit einem Ventil 22 absperrbar. Die Verbindungsleitung 18 ist mit einem Ventil 24 absperrbar.

Die Turbinen- und Generatorkomponente 1 ist eine von vielen Komponenten der Kraftwerksanlage. Zur Steuerung und Regelung der Kraftwerksanlage ist die Leittechnik vorgesehen. Dazu werden - beispielsweise für die Komponente 1 - zur Überwachung und Steuerung des Betriebszustands relevante Parameter erfaßt und von dem Leitsystem der Anlage überwacht. Gegebenenfalls wird durch Steuerbefehle der Betriebszustand der Kraftwerksanlage beeinflußt.

Bei der Projektierung der Leittechnik der Kraftwerksanlage werden die für den Betrieb jeder Komponente erforderlichen Parameter auf Datensätze abgebildet. Für die Turbinen- und Generatorkomponente 1 sind die relevanten Parameter beispielsweise: Der Zustand des zugeführten Hochdruckdampfes, ausgedrückt durch Druck p₁, Temperatur T₁ und Dampfmenge Q₁. Weiter der Zustand von aus dem Hochdruckteil 2a der Turbine 2 entnommene Mitteldruckdampf, ausgedrückt durch Druck p₂, Temperatur T₂ und Dampfmenge Q₂. Ferner der Zustand von aus dem Hochdruckteil 2a der Turbine 2 ausgekoppeltem Niederdruckdampf, ausgedrückt durch Druck p₃, Temperatur T₃ und Dampfmenge Q₃. Außerdem der Zustand von aus dem Niederdruckteil 2b der Turbine 2 ausgekoppeltem Niederdruckdampf, ausgedrückt durch Druck p₄, Temperatur T₄ und Dampfmenge Q₄ sowie die im Generator 10 generierte elektrische Leistung, ausgedrückt durch Stromstärke I, Spannung U und Leistung P.

Diese für den Betrieb der Turbinen- und Generatorenkomponente 1 erforderlichen Parameter werden in einem ersten Verfahrensschritt auf Datensätze DSᵢ abgebildet. Beispielsweise werden für den Parameter "Zustand des zugeführten Hochdruckdampfes" drei Datensätze DS₁, DS₂ und DS₃ erzeugt. Dabei beschreibt der Datensatz DS₁ den Druck p₁, der Datensatz DS₂ die Temperatur T₁ und der Datensatz DS₃ die Frischdampfmenge Q₁ des zugeführten Hochdruckdampfes. Jeder Datensatz umfaßt dabei Sollwerte für die Parameter sowie zulässige Höchst- oder Mindestwerte.

Die Generierung der Datensätze DSᵢ kann manuell oder automatisiert erfolgen. Die Datensätze DSᵢ werden einem Aufbaumodul 40 zugeführt. Auf der Grundlage der Datensätze DSᵢ werden im Aufbaumodul 40 Meß- und/oder Steuerprozesse MSP erstellt. Dabei wird die Information, zum Beispiel des Datensatzes DS₂, die beispielsweise lautet "die Temperatur T₁ des Frischdampfes ist zu messen und sollte möglichst nahe bei 600 °C liegen, aber nicht weniger als 400 °C und nicht mehr als 800 °C betragen", zur Generierung eines Meßprozesses MSP₂ herangezogen. Der Meßprozeß MSP₂ umfaßt demnach einen zur Messung der Temperatur T₁ geeigneten Temperaturfühler. Der Meßprozeß MSP₂ kann in nicht näher dargestellter Weise darüber hinaus eine dem Temperaturfühler zugeordnete Auswerteeinheit zur Verarbeitung von vom Temperaturfühler gelieferten Daten und die für den Datentransport benötigte Verbindungselemente aufweisen. Analog werden für alle anderen für den Betrieb der Turbinen- und Generatorenkomponente 1 relevanten Parameter, insbesondere für die Drücke p₁, p₂, p₃ und p₄, für die Temperaturen T₂, T₃ und T₄, für die Dampfmengen Q₁, Q₂, Q₃ und Q₄, für die Stromstärke I, für die Spannung U und für die Leistung P, Meß- und/oder Steuerprozesse MSPᵢ generiert.

Die Meß- und Steuerprozesse MSPᵢ werden über eine Zuleitung 45 einem Analysemodul 50 zugeführt. Das Analysemodul 50 ist über eine Verbindungsleitung 52 mit einer Datenbank 54 verbunden. In der Datenbank 54 sind charakteristische Kenndaten KD von Bauteilen gespeichert. Die Kenndaten KD umfassen mindestens die grundlegende Funktionsweise jedes Bauteils. Anhand der Kenndaten KD werden im Analysemodul 50 für jeden Meß- und Steuerprozeß MSPᵢ die erforderlichen Bauteile ausgewählt. Diese Auswahl erfolgt anhand von die grundlegende Funktionsweise des Bauteils beschreibenden Kerndatensätzen KS, die Teil der Kenndaten KD sind. Beispielsweise wird für den Meßprozeß MSP₂, das heißt für die Messung der Temperatur T₁ des zugeführten Frischdampfs, ein geeigneter Temperatursensor dadurch ausgewählt, daß er in dem Temperaturintervall zwischen 300 °C und 900 °C funktionsfähig ist. Entsprechend werden die anderen Bauteile des Meßprozesses MSP₂ "Temperaturmessung des zugeführten Frischdampfs" derart ausgewählt, daß sie mit diesem Temperatursensor zur Messung der Temperatur T₁ kompatibel sind. Somit wird im Analysemodul 50 ein Ablaufplan APᵢ für jeden Meß- und Steuerprozeß MSPᵢ erstellt. Im Rahmen jedes Ablaufplans APᵢ werden die ausgewählten Bauteile verknüpft. Dabei kann beispielsweise das Ergebnis erzeugt werden, daß der Temperatursensor mit einem Steuermodul über eine elektrische Leitung zu verbinden ist.

Anhand von für die Kraftwerksanlage relevantem Wissen wird eine Automatisierungsstruktur AS vorgegeben. Diese Automatisierungsstruktur AS umfaßt beispielsweise Informationen wie "es sind fünf Automatisierungsstationen vorzusehen, eine der Automatisierungsstationen ist im Bereich der Kraftwerkswarte vorzusehen, ...", etc.

Sowohl die Ablaufpläne AP als auch die vorgegebene Automatisierungsstruktur AS werden über jeweils eine Leitung 56 bzw. 58 einem Verknüpfungsmodul 60 zugeführt. Im Verknüpfungsmodul 60 wird der Ablaufplan APᵢ jedes Meß- und Steuerprozesses MSPᵢ der Automatisierungsstruktur zugeordnet. Dabei wird beispielsweise festgelegt, daß "die Steuereinheit der Temperaturmessung des zugeführten Frischdampfes in einer Automatisierungsstation im Bereich der Turbinenhalle unterzubringen" ist. Somit wird die Leittechnik der Dampfkraftanlage erstellt. Die Einrichtung zur Projektierung der Leittechnik liefert neben einem Konzept der Leittechnik eine Liste der benötigten Bauteile sowie eine Liste der benötigten Verbindungselemente, wie beispielsweise Kabel.

Das Aufbaumodul 40, das Analysemodul 50 und das Verknüpfungsmodul 60 sind in einem - nicht dargestellten - mobilen Gehäuse angeordnet. Dadurch ist die Einrichtung zur Projektierung der Leittechnik ortsungebunden und somit flexibel einsetzbar. Der modulare Aufbau ermöglicht in vorteilhafter Weise eine einfache Wartung und Erweiterung der Einrichtung.

## Patentansprüche

1. Verfahren zur Projektierung der Leittechnik für eine aus Komponenten (1) bestehenden technischen Anlage, bei dem
- für die für den Betrieb jeder Komponente (1) erforderlichen Parameter (pᵢ, Tᵢ, Qᵢ) Datensätze (DSᵢ) generiert und hinterlegt werden,
- anhand der Datensätze (DSᵢ) Meß- und/oder Steuerprozesse (MSPᵢ) automatisiert erstellt werden,
- für jeden Meß- und/oder Steuerprozeß (MSPᵢ) zu dessen Ausführungen geeignete Bauteile ausgewählt und im Rahmen eines Ablaufplans (APᵢ) automatisiert miteinander verknüpft werden,
- anhand von für die technische Anlage relevantem Wissen eine Automatisierungsstruktur (AS) vorgegeben wird, und
- jeder Ablaufplan (APᵢ) der Automatisierungsstruktur (AS) zur Erstellung der Leittechnik automatisiert zugeordnet wird.

2. Verfahren nach Anspruch 1,
**dadurch gekennzeichnet**, daß die Bauteile für jeden Meß- und/oder Steuerprozeß (MSPᵢ) anhand von für jedes Bauteil charakteristischen, in einer Datenbank (54) gespeicherten Kenndaten (KD) ausgewählt werden.

3. Verfahren nach Anspruch 2,
**dadurch gekennzeichnet**, daß die Kenndaten (KD) jedes Bauteils einen Kerndatensatz (KS) umfassen, der jeweils lediglich die grundlegende Funktionsweise des Bauteils beschreibt, und daß die Bauteile ausschließlich anhand dieser funktionellen Kerndatensätze (KS) ausgewählt werden.

4. Einrichtung zur Projektierung der Leittechnik einer technischen Anlage, insbesondere zur Durchführung des Verfahrens nach einem der Ansprüche 1 bis 3, die umfaßt:
a) ein Aufbaumodul (40) zur Erstellung von Meß- und/oder Steuerprozessen (MSPᵢ) auf der Grundlage von die technische Anlage beschreibenden Datensätzen (DSᵢ),
b) ein Analysemodul (50) zur Auswahl geeigneter Bauteile und deren Verknüpfung miteinander im Rahmen eines Ablaufplans (APᵢ) für jeden der Meß- und/oder Steuerprozesse (MSPᵢ) und
c) ein Verknüpfungsmodul (60) zur Zuordnung des Ablaufplans (APᵢ) jedes Meß- und/oder Steuerprozesses (MSPᵢ) zu einer vorgebbaren Automatisierungsstruktur (AS) .

5. Einrichtung nach Anspruch 4,
**dadurch gekennzeichnet**, daß ein mit dem Analysemodul (50) verbundenes Speichermodul (54), insbesondere in Form einer Datenbank, für die Bauteile charakterisierende Kenndaten (KD) vorgesehen ist.

6. Einrichtung nach Anspruch 4 oder 5,
**dadurch gekennzeichnet**, daß die Module (40, 50, 60) in einem mobilen Gehäuse angeordnet sind.

## Claims

1. Method for designing the control system for a technical installation consisting of components (1), wherein
- data blocks (DSᵢ) are generated and stored for the parameters (pᵢ, Tᵢ, Qᵢ) that are required for the operation of each component (1);
- measuring and/or control processes (MSPᵢ) are established in an automated manner with reference to the data blocks (DSᵢ);
- components that are suitable for carrying out each measuring and/or control process (MSPᵢ) are selected therefor and are linked together in an automated manner within the framework of a flow chart (APᵢ);
- an automation structure (AS) is prescribed with reference to knowledge that is relevant to the technical installation; and
- each flow chart (APᵢ) is assigned in an automated manner to the automation structure (AS) for the purpose of establishing the control system.

2. Method according to claim 1,
characterised in that the components for each measuring and/or control process (MSPᵢ) are selected with reference to characteristic data (KD) that is characteristic of each component and is stored in a data base (54).

3. Method according to claim 2,
characterised in that the characteristic date (KD) of each component includes a core data block (KS), which in each case merely describes the basic mode of functioning of the component, and in that the components are selected exclusively with reference to these functional core data blocks (KS).

4. Device for designing the control system of a technical installation, in particular for carrying out the method according to one of claims 1 to 3, which device includes:
a) a structuring module (40) for establishing measuring and/or control processes (MSPᵢ) on the basis of data blocks (DSᵢ) that describe the technical installation;
b) an analysis module (50) for the selection of suitable components and the linkage thereof one with the other within the framework of a flow chart (APᵢ) for each of tho measuring and/or control processes (MSPᵢ); and
c) a linking module (60) for assigning the flow chart (APᵢ) of each measuring and/or control process (MSPᵢ) to a prescribable automation structure (AS).

5. Device according to claim 4,
characterised in that a storage module (54), in particular in the form of a data base, which is connected to the analysis module (50), is provided for characteristic data (KD) that characterises the components.

6. Device according to claim 4 or 5,
characterised in that the modules (40, 50, 60) are arranged in a mobile housing.

## Revendications

1. Procédé de planification de la technique de gestion pour une installation technique constituée de plusieurs composants (1), dans lequel
- on génère et on met en mémoire des jeux (DSᵢ) de données pour les paramètres (pᵢ, Tᵢ, Qᵢ) nécessaires au fonctionnement de chaque composant (1),
- on produit de manière automatisée des opérations de mesure et/ou de commande à l'aide des jeux (DSᵢ) de données,
- on choisit pour chaque opération (MSPᵢ) de mesure et/ou de commande des composants adaptés à sa réalisation et on les combine entre eux de manière automatisée dans le cadre d'un plan (APᵢ) de déroulement,
- on prescrit une structure (AS) d'automatisation à l'aide d'un savoir pertinent pour l'installation technique, et
- on associe de manière automatisée chaque plan (APᵢ) de déroulement à la structure (AS) d'automatisation pour produire la technique de gestion.

2. Procédé suivant la revendication 1, caractérisé en ce que l'on sélectionne les composants pour chaque opération (MSPᵢ) de mesure et/ou de commande à l'aide de données (KD) d'identification caractéristiques de chaque composant et mémorisées dans une banque (54) de données.

3. Procédé suivant la revendication 2, caractérisé en ce que les données (KD) d'identification de chaque composant comprennent un jeu (KS) de données de base qui décrit chaque fois uniquement le mode de fonctionnement de base du composant, et en ce que les composants sont choisis exclusivement à l'aide de ce jeu (KS) fonctionnel de données de base.

4. Dispositif de planification de la technique de gestion d'une installation technique, notamment pour la mise en oeuvre du procédé suivant l'une des revendications 1 à 3, qui comprend :
a) un module (40) structurel pour produire des opérations (MSPᵢ) de mesure et/ou de commande sur la base de jeux (DSᵢ) de données décrivant l'installation technique,
b) un module (50) d'analyse pour sélectionner des composants adéquats et leur combinaison les uns avec les autres dans le cadre d'un plan (APᵢ) de déroulement pour chacune des opérations (MSPᵢ) de mesure et/ou de commande et
c) un module (60) de combinaison pour associer le plan (APᵢ) de déroulement de chaque opération (MSPᵢ) de mesure et/ou de commande à une structure (AS) d'automatisation pouvant être prescrite.

5. Dispositif suivant la revendication 4, caractérisé en ce qu'il est prévu un module (54) de mémorisation, notamment sous la forme d'une banque de données, relié au module (50) d'analyse, pour les données (KD) d'identification caractérisant les composants.

6. Dispositif suivant la revendication 4 ou 5, caractérisé en ce que les modules (40, 50, 60) sont montés dans un boîtier mobile.
